# FASCICULE DE BREVET EUROPEEN

(11) **EP 0 376 840 B1**
(45) Date de publication et mention de la délivrance du brevet: **10.08.1994**
(21) Numéro de dépôt: 89403657.3
(22) Date de dépôt: 27.12.1989
(51) Int. Cl.: G02B 7/182, F16B 3/00, B64G 1/66

(54) **Dispositif de fixation d'un objet fragile tel qu'un miroir**
Vorrichtung zur Befestigung eines zerbrechlichen Gegenstandes, z.B. ein Spiegel
Device to fix a fragile object such as a mirror

(30) Priorité: 29.12.1988 FR 8817399
(43) Date de publication de la demande: 04.07.1990
(73) Titulaire: AEROSPATIALE Société Nationale Industrielle, 75781 Paris Cédex 16 (FR); REOSC (S.A. RECHERCHES ET ETUDES D'OPTIQUE ET SCIENCES CONNEXES), 91160 Ballainvilliers (FR)
(72) Inventeur: Derenne, Philippe, F-06250 Mougins (FR); Louis, Michel, F-06200 Nice (FR); Camous, Jacques, F-06600 Antibes (FR); Tarreau, Michel, F-91160 Ballainvilliers (FR)
(74) Mandataire: Dubois-Chabert, Guy

(56) Documents cités:
- EP-A- 0 285 555
- WO-A-86/05425
- FR-A- 2 345 610

## Description

L'invention concerne un dispositif permettant de fixer un objet fragile tel qu'un miroir nécessitant un positionnement précis, tout en pouvant être soumis à des gradients de températures et à des charges mécaniques transitoires élevées.

Un tel dispositif de fixation peut notamment être utilisé sur un satellite artificiel, pour fixer sur le satellite un miroir en silice ou en verre dont la masse peut atteindre environ 20 kg. En effet, entre ses conditions d'utilisation dans l'espace et au sol, un tel miroir est soumis à des températures qui peuvent varier entre -269°C et +180°C. De plus, il doit supporter des accélérations et des vibrations importantes, notamment durant la phase de lancement, sans subir de dégradations ni de déformations notables de sa surface active.

Parmi les dispositifs de fixation d'un objet fragile tel qu'un miroir connus actuellement, aucun ne satisfait pleinement à ces différentes exigences.

Ainsi, par exemple, la technique connue consistant à coller des patins à même le substrat du miroir, qui ne présente pas ou peu d'inconvénient dans une plage de températures inférieure à 40°C, conduit à un risque de rupture du film de colle ou du substrat pour de très grandes plages de températures, en raison des surcontraintes engendrées dans le substrat du miroir par les dilatations différentielles.

Par ailleurs, il est connu du document FR-A-2 345 610 de fixer un porte-outil sur une machine de chantier en bloquant un élément amovible dans une rainure en queue d'aronde ouverte à ses extrémités, au moyen d'un élément en coin lié à l'élément amovible par des vis.

L'invention a précisément pour objet un dispositif de fixation d'un objet fragile tel qu'un miroir, dont la conception particulière lui permet de supporter de telles dilatations différentielles sans induire de surcontraintes dans le substrat du miroir, et aussi de supporter des charges transitoires élevées tout en préservant une bonne précision de positionnement et pratiquement sans engendrer de déformations.

Conformément à l'invention, ce résultat est obtenu au moyen d'un dispositif de fixation d'un objet sur une structure support, comprenant au moins une rainure à section en forme de queue d'aronde, un premier lardon de section trapézoïdale apte à être monté dans la rainure, de façon à être en contact avec une face latérale plane et inclinée de la rainure, un patin de supportage placé en face de la rainure et portant au moins un organe de verrouillage apte à venir se placer dans la rainure pour maintenir le lardon contre ladite face latérale inclinée, et des vis par lesquelles le lardon est fixé au patin de supportage, caractérisé par le fait que :
- ledit objet est un objet fragile tel qu'un miroir ;
- la rainure est formée dans l'objet et comporte deux extrémités non débouchantes ;
- un deuxième lardon, de section trapézoïdale, est apte à être monté dans la rainure, de façon à être en contact avec une autre face latérale plane et inclinée de la rainure, ce deuxième lardon étant fixé au patin de supportage par des vis ;
- l'organe de verrouillage est apte à venir se placer entre le premier et le deuxième lardons, de façon à les maintenir contre les faces latérales planes et inclinées de la rainure ; et
- au moins une rondelle élastique est interposée entre le patin de supportage et la tête de chaque vis.

Dans ce dispositif, le caractère non débouchant de la rainure en queue d'aronde formée dans l'objet à fixer permet de ne pas fragiliser ce dernier à l'emplacement de la rainure. La forme donnée aux lardons permet de les introduire dans la rainure et de les en extraire, tout en assurant une fixation efficace lorsque l'organe de verrouillage est placé entre les lardons. Les rondelles élastiques associées aux vis permettent le rattrapage du jeu dû aux dilatations différentielles des matériaux en présence, lors des montées et descentes en température, sans que la tension de serrage des vis varie de façon appréciable. L'effort de serrage des vis est réglé afin qu'à tout moment, c'est-à-dire notamment sous l'effet de la gravité et lors du lancement, les efforts appliqués sur le miroir soient repris par frottement.

Dans un mode de réalisation préféré de l'invention, l'organe de verrouillage est constitué par une partie en saillie du patin de supportage, présentant des faces planes inclinées formant avec les faces latérales de la rainure deux logements à section en forme de trapèzes isocèles, dans lesquels sont placés les deux lardons.

Afin que les efforts de serrage de la vis soient appliqués sur une surface aussi grande que possible de l'objet à fixer, chaque lardon présente avantageusement une face plane apte à être appliquée contre l'une des faces latérales de la rainure et une face convexe, par exemple approximativement en arc de cercle, apte à être appliquée contre l'une des faces planes inclinées de l'organe de verrouillage.

De préférence, le dispositif selon l'invention comprend deux rainures parallèles et de mêmes dimensions formées dans l'objet, une paire de lardons étant logée dans chacune des rainures, et tous les lardons étant reliés à un patin de supportage unique.

Dans ce cas, les deux lardons les plus à l'intérieur du dispositif sont réalisés en un premier matériau tel que de l'acier inoxydable ayant un coefficient de dilatation élevé par rapport à un deuxième matériau tel que de l'invar dans lequel sont réalisés les deux autres lardons et le patin de supportage.

Dans le cas où le dispositif comprend deux rainures parallèles, le patin de supportage unique porte de préférence, entre les rainures, un pion de positionnement apte à être reçu pratiquement sans jeu dans un logement cylindrique formé dans l'objet.

Pour éviter, lors du serrage, l'écaillage des micro-aspérités de surface de l'objet et, par conséquent, la naissance de micro-fissures pouvant ensuite se propager jusqu'à la rupture de ce dernier, une feuille fine en un matériau malléable tel que de l'or est placée avantageusement entre l'objet et chacune des parties du dispositif avec lesquelles il est en contact, c'est-à-dire le patin, les lardons et le pion de positionnement lorsqu'il existe.

Un mode de réalisation préféré de l'invention va à présent être décrit, à titre d'exemple non limitatif, en se référant aux dessins annexés, dans lesquels :
- la figure 1 est une vue de face, en coupe partielle selon la ligne I-I de la figure 2, représentant un dispositif de fixation conforme à l'invention ;
- la figure 2 est une vue de dessus, en coupe partielle selon la ligne II-II de la figure 1, du dispositif de fixation ;
- la figure 3 est une vue en coupe selon la ligne III-III de la figure 1, en l'absence des vis de fixation des lardons sur le patin ;
- la figure 4 est une vue représentant à plus grande échelle et en coupe la fixation de l'un des lardons du dispositif sur le patin ; et
- la figure 5 est une vue représentant à plus grande échelle et en coupe le pion permettant de positionner le patin sur le miroir.

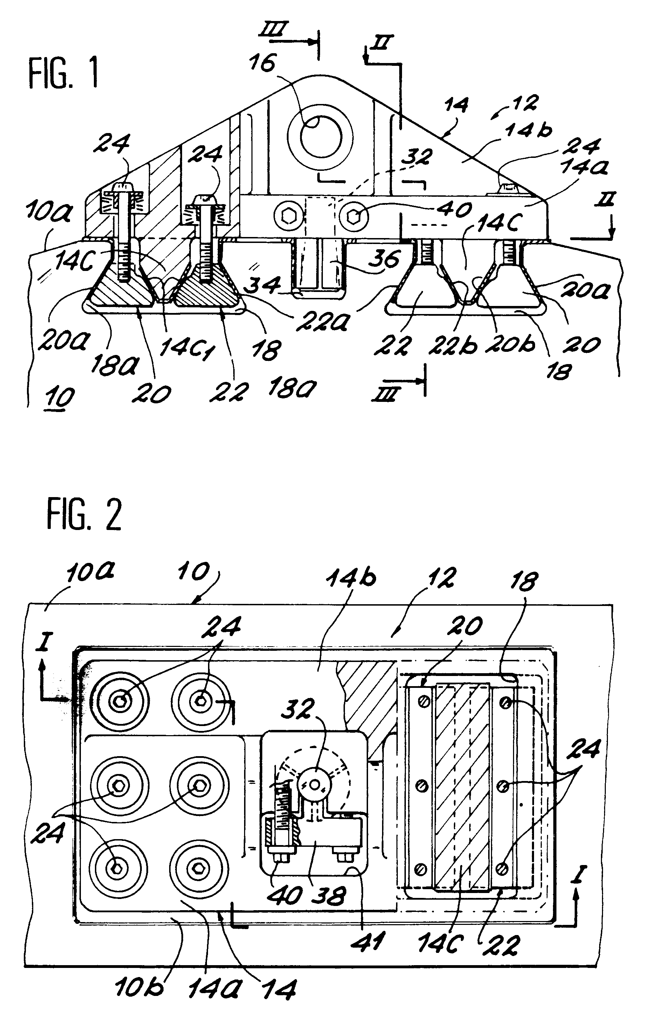

Le dispositif de fixation selon l'invention, illustré sur les figures 1 à 4, est destiné à assurer la fixation d'un miroir 10 en un matériau fragile tel que de la silice sur une structure porteuse appropriée (non représentée) d'un satellite artificiel. Le miroir 10 a la forme d'un disque plan dont le diamètre peut être, par exemple, voisin de 600 mm et dont la masse peut être d'environ 20 kg.

Pour tenir compte des efforts appliqués au miroir aussi bien au sol (gravité) que dans l'espace (lancement), qui sont essentiellement orientés selon des directions tangentielles au miroir, la fixation du miroir 10 est assurée par au moins trois dispositifs de fixation tels que le dispositif 12, coopérant avec le bord circonférentiel 10a du miroir 10.

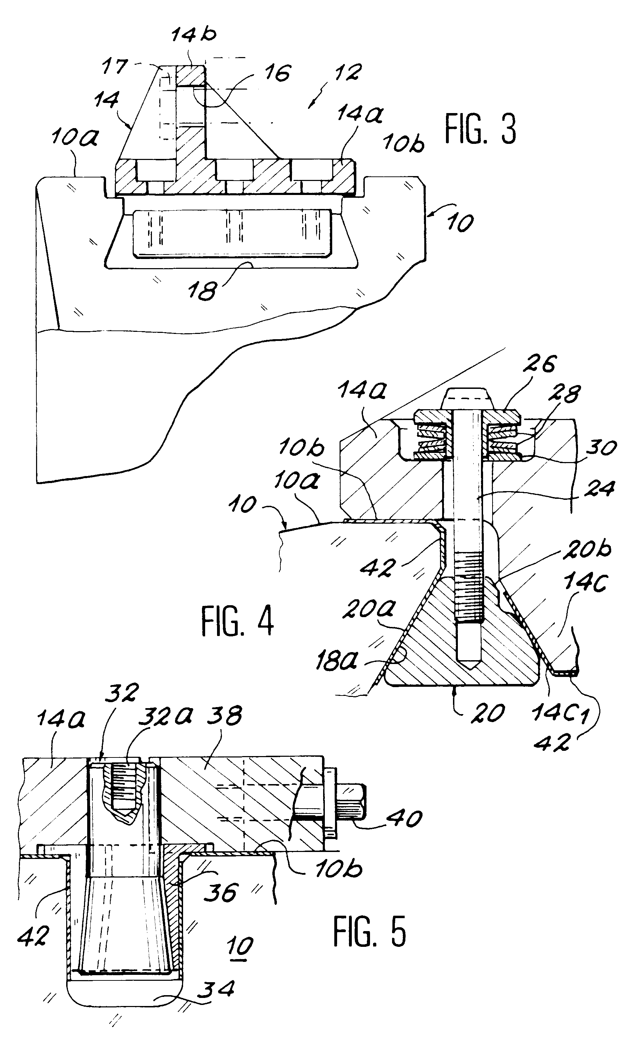

A l'emplacement de chacun des dispositifs de fixation 12, ce bord circonférentiel circulaire 10a du miroir 10 présente un méplat 10b, de forme rectangulaire, qui ne s'étend pas jusqu'aux faces avant et arrière du miroir, comme l'illustrent en particulier les figures 2 et 3. La semelle 14a, rectangulaire et plane, d'un patin de supportage 14 du dispositif de fixation 12 est appliquée sur ce méplat 10b. Plus précisément, la semelle du patin 14, de forme rectangulaire, présente une longueur approximativement égale à la longueur circonférentielle du méplat 10b et une largeur légèrement inférieure à la largeur de ce méplat.

Le patin de supportage 14 comporte également une nervure 14b qui fait saillie à partir de la semelle 14a du côté opposé au miroir 10, selon une direction parallèle aux faces de ce dernier. Cette nervure 14b est traversée en son milieu par un trou 16 orienté parallèlement à l'axe du miroir et permettant la fixation du patin 14 sur une structure de supportage (non représentée) prévue à cet effet sur le satellite. Cette fixation peut être réalisée à l'aide de tout moyen approprié tel qu'un boulon 17 représenté partiellement en traits mixtes sur la figure 3.

Le dispositif de fixation 12 selon l'invention comprend également deux rainures parallèles 18, à section en forme de queue d'aronde (figure 1), qui sont usinées dans le méplat 10b selon une direction parallèle à l'axe du miroir 10, à proximité de chacune des extrémités circonférentielles de ce méplat 10b. Comme le montre bien la figure 3, les rainures 18 comportent des extrémités qui ne débouchent pas sur les faces latérales du miroir 10. Cette caractéristique est essentielle, car elle permet de préserver la forme circulaire du miroir à proximité de chacune de ses faces, ce qui évite la formation de zones de fragilité dans lesquelles des amorces de rupture pourraient se produire.

Chacune des rainures en queue d'aronde 18 présente deux faces latérales 18a planes et inclinées, faisant face au fond de la rainure et formant avec ce dernier un angle voisin de 60°. Les rainures 18, de même que le méplat 10b, sont usinées directement dans le miroir 10, par exemple par fraisage.

Dans chacune des rainures 18 sont placés deux lardons 20 et 22 présentant approximativement en section la forme de trapèzes isocèles. Les dimensions de ces lardons 20 et 22 sont telles qu'ils peuvent être introduits et extraits de la rainure 18 correspondante et placés côte à côte dans cette rainure de telle sorte que chacun d'entre eux soit en contact avec l'une des faces latérales 18a, comme l'illustre la figure 1.

De façon plus précise, les figures 1 à 4 font apparaître que chacun des lardons 20 et 22 présente une face plane inclinée respectivement 20a et 22a apte à venir en appui contre la face latérale 18a correspondante de la rainure 18 dans laquelle sont placés ces lardons.

Le patin de supportage 14 présente également, sur la face de la semelle 14a tournée vers le miroir 10, deux parties en saillie 14c, en forme de coins, qui viennent se placer entre les lardons 20 et 22 montés dans chacune des rainures 18 lorsque le patin 14 est mis en place. Les parties en saillie 14c constituent ainsi des organes de verrouillage contre lesquels sont également en appui les lardons 20 et 22.

De façon plus précise, chacune des parties en saillie 14c comporte deux surfaces planes inclinées 14c1, tournées vers le fond de la rainure 18 correspondante et formant avec ce dernier le même angle que les faces latérales inclinées 18a. Les parties en saillie 14c délimitent ainsi, à l'intérieur de la rainure correspondante 18, deux logements à section en forme de trapèzes isocèles, dans lesquels sont emprisonnés chacun des lardons 20 et 22.

Afin de garantir un contact satisfaisant entre les faces planes inclinées 20a et 22a des lardons et les faces latérales planes 18a des rainures, les faces 20b et 22b des lardons 20 et 22 qui sont en contact avec les faces inclinées 14c1 des parties en saillie 14c présentent en section des formes convexes, à section en arc de cercle (figure 4). Une partie en creux peut également être prévue sur ces faces 20b et 22b, afin notamment d'alléger les lardons.

Comme l'illustrent les figures 1 et 2, chacun des lardons 20 et 22 est fixé à la semelle du patin 14 par des vis 24, par exemple au nombre de trois pour chacun des lardons. Ces vis 24 traversent librement la semelle du patin 14 et leur extrémité est vissée dans le lardon correspondant.

Comme l'illustre plus en détail la figure 4, la tête de chacune des vis 24 est en appui, par l'intermédiaire d'une rondelle 26 d'appui et de centrage, sur un empilement de rondelles élastiques telles que des rondelles Belleville 28. Les rondelles Belleville 28 sont elle-mêmes en appui sur le fond d'un lamage formé sur la face extérieure de la semelle 14a du patin 14, par l'intermédiaire d'une rondelle 30.

Lorsque les vis 24 sont vissées dans les lardons 20 et 22, ces derniers sont plaqués avec une force déterminée contre les faces latérales 18a des rainures 18 et contre les faces inclinées 14c1 des parties en saillie 14c du patin. La force ainsi appliquée au travers des vis 24 est déterminée afin que la fixation du miroir 10 puisse supporter les accélérations et les vibrations auxquelles est soumis le satellite, notamment au cours de la phase de lancement.

L'interposition des rondelles élastiques 28 entre les vis 24 et le patin 14 permet de compenser les dilatations différentielles qui se produisent entre les différents matériaux lorsque le dispositif est soumis à des variations de températures importantes. De plus, les caractéristiques des rondelles élastiques permettent, en dépit de ce rattrapage, de maintenir l'effort de serrage appliqué sur les lardons a une valeur relativement constante.

De préférence, le patin 14 ainsi que les lardons 20 situés vers l'extérieur du dispositif sont réalisés en un matériau présentant un coefficient de dilatation très faible, tel que l'invar. Au contraire, les lardons 22 situés vers l'intérieur du dispositif sont réalisés en un matériau présentant un coefficient de dilatation plus élevé, tel que l'acier inoxydable. Ce choix de matériaux permet d'obtenir un déplacement simultané et de valeur voisine des lardons 20 et 22 soit vers le patin 14 lors d'un abaissement de la température, soit en éloignement de ce patin dans le cas d'un accroissement de la température. Il est à noter que les angles d'inclinaison des faces latérales 18a des rainures (voisins de 60°) sont optimisés de façon à permettre ce déplacement relatif.

Dans le mode de réalisation représenté sur les figures, on a représenté le cas d'un dispositif de fixation 12 permettant le maintien d'un positionnement très précis du miroir 10, dans le cas où ce dernier est soumis à des cyclages thermiques. Pour assurer ce positionnement, et comme l'illustre plus en détail la figure 5, la semelle 14a du patin 14 porte en son centre un pion de positionnement 32 qui fait saillie dans un logement cylindrique 34 usiné au centre du méplat 10b du miroir, entre les deux rainures 18.

La partie du pion 32 située à l'intérieur du logement cylindrique 34 présente une forme tronconique dont le diamètre va en augmentant en allant vers le fond du logement. Une bague fendue 36 formée par exemple de trois secteurs circulaires est logée entre cette partie tronconique du pion 32 et la paroi cylindrique du logement 34. La bague fendue 36 présente une surface intérieure tronconique complémentaire de celle de la partie tronconique du pion 32 et une surface extérieure cylindrique. Par conséquent, lorsque le pion 32 est déplacé vers le patin 14, la bague 36 est plaquée contre la paroi cylindrique du logement 34. Un tel effort de traction peut notamment être appliqué sur le pion de positionnement 32 par une vis (non représentée) prenant appui sur la face supérieure de la semelle 14a du patin 14 et vissée dans un trou taraudé 32a formé à cet effet dans le pion 32.

Lorsque la position du pion 32 correspond à un plaquage satisfaisant de la bague 36 contre la paroi cylindrique du logement 34, une pièce de blocage 38 apparaissant sur les figures 2 et 5 est fixée dans la semelle du patin 14, par exemple au moyen de vis 40. Comme l'illustre la figure 2, cette pièce de blocage 38 est placée dans un évidement 41 formé à cet effet dans la semelle 14a du patin 14 et elle comporte une partie en saillie dont l'extrémité vient prendre appui sur un côté du pion 32 pour le bloquer dans la semelle.

De préférence, une fine feuille 42 en un matériau malléable tel que de l'or fin recuit est interposée entre le miroir 10 et chacune des pièces en contact avec ce dernier. Ainsi, une feuille d'or est placée entre la semelle 14c du patin et le méplat 10b formé sur le miroir, entre les faces latérales 18a des rainures et les faces 20a et 22a des lardons, et entre les secteurs 36 et l'évidement cylindrique 34.

Comme l'illustrent notamment les figure 1 et 4, une feuille d'or 42 peut également être placée entre chacune des parties en saillie 14c du patin 14 et les lardons 20 et 22.

Ces différentes feuilles d'or 42 permettent d'éviter l'écaillage des micro-aspérités de surfaces du miroir lors du serrage, en répartissant l'effort de serrage sur la totalité des surfaces en contact. De cette manière, on empêche la naissance de micro-fissures qui pourraient ensuite se propager et conduire à la rupture du miroir.

Le dispositif de fixation 12 qui vient d'être décrit permet de supporter sans dommage des variations de températures pouvant être comprises entre -269°C et +180°C. De plus, il supporte des charges transitoires éventuellement supérieures à 20g avec une précision de positionnement de quelques micromètres, lors de l'utilisation du miroir. Enfin, les déformations de la surface active du miroir sont inférieures à 0,1 micromètre.

Bien entendu, l'invention n'est pas limitée au mode de réalisation qui vient d'être décrit à titre d'exemple, mais en couvre toutes les variantes.

En premier lieu, on comprendra aisément que le dispositif de fixation selon l'invention peut être utilisé pour fixer des objets fragiles autres que des miroirs et dont la forme peut être différente. L'emplacement du dispositif de fixation peut également être différent de celui qui a été décrit.

Par ailleurs, dans certaines applications, le pion de centrage peut être supprimé.

Lorsque les efforts et les chocs supportés par l'objet sont moins importants, une seule rainure comparable aux rainures 18 peut être réalisée dans l'objet. Les deux lardons reçus dans cette rainure, ainsi que le patin sur lequel ils sont fixés, sont alors réalisés en un même matériau présentant un faible coefficient de dilatation, tel que l'invar.

La forme des lardons peut également être différente de celle qui a été décrite, notamment en ce qui concerne leurs faces tournées vers l'organe de verrouillage 14c, ce dernier pouvant d'ailleurs être réalisé séparément du patin 14 et mis en place après ce dernier.

## Revendications

1. Dispositif de fixation d'un objet sur une structure support, comprenant au moins une rainure (18) à section en forme de queue d'aronde, un premier lardon (20) de section trapézoïdale apte à être monté dans la rainure, de façon à être en contact avec une face latérale (18a) plane et inclinée de la rainure, un patin de supportage (14) placé en face de la rainure et portant au moins un organe de verrouillage (14c) apte à venir se placer dans la rainure pour maintenir le lardon contre ladite face latérale inclinée, et des vis (24) par lesquelles le lardon (20) est fixé au patin de supportage, caractérisé par le fait que :
- ledit objet est un objet fragile tel qu'un miroir ;
- la rainure (18) est formée dans l'objet et comporte deux extrémités non débouchantes ;
- un deuxième lardon (22), de section trapézoïdale, est apte à être monté dans la rainure, de façon à être en contact avec une autre face latérale (18a) plane et inclinée de la rainure, ce deuxième lardon étant fixé au patin de supportage (14) par des vis (24) ;
- l'organe de verrouillage (14c) est apte à venir se placer entre le premier et le deuxième lardons (20, 22), de façon à les maintenir contre les faces latérales planes et inclinées de la rainure ; et
- au moins une rondelle élastique (28) est interposée entre le patin de supportage (14) et la tête de chaque vis (24).

2. Dispositif selon la revendication 2, caractérisé par le fait que ledit organe de verrouillage est constitué par une partie en saillie (14c) du patin de supportage (14), présentant des faces planes inclinées formant avec les faces latérales (18a) de la rainure deux logements à section en forme de trapèzes isocèles, dans lesquels sont placés les deux lardons (20,22).

3. Dispositif selon la revendication 2, caractérisé par le fait que chaque lardon (20,22) présente une face plane (20a,22a) apte à être appliquée contre l'une des faces latérales (18a) de la rainure et une face convexe (20b,22b) apte à être appliquée contre l'une des faces planes inclinées de l'organe de verrouillage (14c).

4. Dispositif selon l'une quelconque des revendications 1 à 3, caractérisé par le fait qu'une feuille (42) en un matériau malléable est placée entre l'objet et le patin et entre l'objet et les lardons.

5. Dispositif selon l'une quelconque des revendications 1 à 4, caractérisé par le fait qu'une feuille (42) en un matériau malléable est placée entre l'organe de verrouillage (14c) et les lardons (20,22).

6. Dispositif selon l'une quelconque des revendications précédentes, caractérisé par le fait qu'il comprend deux rainures (18) parallèles et de mêmes dimensions formées dans ledit objet, une paire de lardons (20,22) étant logée dans chacune des rainures, tous les lardons étant reliés à un patin de supportage unique (14).

7. Dispositif selon la revendication 6, caractérisé par le fait que les deux lardons (20,22) les plus à l'intérieur du dispositif sont réalisés en un premier matériau ayant un coefficient de dilatation élevé par rapport à un deuxième matériau dans lequel sont réalisés les deux autres lardons (20) et le patin de supportage (14).

8. Dispositif selon la revendication 7, caractérisé par le fait que le premier matériau est de l'acier inoxydable et le deuxième matériau de l'invar.

9. Dispositif selon l'une quelconque des revendications 6 à 8, caractérisé par le fait que le patin de supportage unique (14) porte, entre les rainures (18), un pion de positionnement (32) apte à être reçu pratiquement sans jeu dans un logement cylindrique (34) formé dans ledit objet.

10. Dispositif selon la revendication 9, caractérisé par le fait qu'une feuille en un matériau malléable (42) est placée entre l'objet et le pion de positionnement.

11. Dispositif selon l'une quelconque des revendications 4, 5 et 10, caractérisé par le fait que ledit matériau malléable est de l'or.

## Claims

1. Device for fixing an object to a support structure, having at least one groove (18) with a dovetail-shaped section, a first thin strip (20) having a trapezoidal section and which can be fitted in the groove, so as to be in contact with a planar, lateral, inclined face (18a) of the groove, a support block (14) positioned in front of the groove and carrying at least one locking member (14c) which can be placed in the groove in order to maintain the thin strip against said lateral, inclined face, and screws (24) by which the thin strip (20) is fixed to the support block, characterized in that:
- said object is a fragile object such as a mirror,
- the groove (18) is formed in the object and has two non-issuing ends,
- a second thin strip (22), which has a trapezoidal section, can be fitted in the groove so as to be in contact with another inclined, planar, lateral face (18a) of the groove, said second thin strip being fixed to the support block (14) by screws (24),
- the locking member (14c) is positioned between the first and second thin strips (20,22), so as to maintain them against the inclined, planar, lateral faces of the groove and
- at least one elastic washer (28) is interposed between the support block (14) and the head of each screw (24).

2. Device according to claim 1, characterized in that said locking member is constituted by a projecting portion (14c) of the support block (14) having planar, inclined faces forming with the lateral faces (18a) of the groove, two housings shaped like isosceles trapezia, in which are placed the two thin strips (20,22).

3. Device according to claim 2, characterized in that each thin strip (20,22) has a planar face (20a,22a) which can be applied to one of the lateral faces (18a) of the groove and a convex face (20b,22b) which can be applied to one of the inclined, planar faces of the locking member (14c).

4. Device according to any one of the claims 1 to 3, characterized in that a sheet (42) made from a malleable material is placed between the object and the block and between the object and the thin strips.

5. Device according to any one of the claims 1 to 4, characterized in that a sheet (42) of a malleable material is placed between the locking member (14c) and the thin strips (20,22).

6. Device according to any one of the preceding claims, characterized in that it has two parallel grooves (18) with the same dimensions formed in the said object, a pair of thin strips (20,22) being placed in each of the grooves, all the thin strips being connected to a single support block (14).

7. Device according to claim 6, characterized in that the two thin strips (20,22) furthest towards the inside of the device are made from a first material having a high expansion coefficient compared with a second material from which are made the two other thin strips (20) and the support block (14).

8. Device according to claim 7, characterized in that the first material is stainless steel and the second material is invar.

9. Device according to any one of the claims 6 to 8, characterized in that the single support block (14) carries, between the grooves (18), a positioning pin (32) which can be received substantially without clearance in a cylindrical slot (34) formed in said object.

10. Device according to claim 9, characterized in that a malleable material sheet (42) is placed between the object and the positioning pin.

11. Device according to any one of the claims 4,5 and 10, characterized in that said malleable material is gold.

## Patentansprüche

1. Vorrichtung zur Befestigung eines Gegenstandes auf einer Trägerstruktur, umfassend mindestens eine Vertiefung (18) mit einem Querschnitt in Form eines Schwalbenschwanzes, einer ersten Leiste (20) mit einem trapezförmigen Querschnitt passend zur Anbringung in der Vertiefung in der Weise, daß sie in Kontakt mit einer Längsfläche (18a) steht, die eben und geneigt in der Vertiefung ist, eine Stützkufe (14), die sich gegenüber der Vertiefung befindet und mindestens ein Verriegelungselement (14c) trägt, welches sich in der Vertiefung einlassen kann, um die Leiste gegen die geneigete Längsfläche zu halten, und Schrauben (24), durch welche die Leiste (20) an der Stützkufe befestigt ist, **dadurch gekennzeichnet, daß:**
- der Gegenstand ein zerbrechlicher Gegenstand ist wie beispielsweise ein Spiegel;
- die Vertiefung (18) in dem Gegenstand gebildet ist und zwei nicht-hervorstehende Extremitäten aufweist;
- eine zweite Leiste (22) mit trapezförmigem Querschnitt in der Weise in der Vertiefung vorgesehen werden kann, daß sie in Kontakt mit der anderen Längsfläche (18a) steht, welche eben und geneigt in der Vertiefung ist, wobei die zweite Leiste an der Stützkufe (14) durch Schrauben (24) befestigt ist;
- ein Verriegelungselement (14c) zwischen der ersten und der zweiten Leiste (20,22) in der Weise vorgesehen werden kann, daß es diese gegen die ebene und geneigte Längsfläche der Vertiefung hält; und
- mindestens eine elastische Unterlegscheibe (28), die zwischen der Stützkufe (14) und dem Kopf jeder Schraube (24) vorgesehen ist.

2. Vorrichtung nach Anspruch 1, **dadurch gekennzeichnet, daß** das Verriegelungselement durch einen vorstehenden Teil (14c) der Stützkufe (14) gebildet wird, die geneigte ebene Flächen darstellen, welche mit den Längsflächen (18a) der Vertiefung zwei Sitze bilden, deren Querschnitt die Form von gleichschenkligen Trapezen hat und in welchen die beiden Leisten (20,22) vorgesehen sind.

3. Vorrichtung nach Anspruch 2, **dadurch gekennzeichnet, daß** jede Leiste (20,22) eine ebene Fläche (20a,22a) darstellt, die geeignet ist zur Anlegung gegen eine der Längsflächen (18a) der Vertiefung und eine konvexe Fläche (20b,22b), die geeignet ist zur Anlegung gegen eine der ebenen, geneigten Flächen des Verriegelungselements (14c).

4. Vorrichtung nach einem der vorangegangenen Ansprüche 1 bis 3, **dadurch gekennzeichnet, daß** eine Lage (42) aus einem nachgiebigen Material zwischen dem Gegenstand und der Stützkufe und zwischen dem Gegenstand und den Leisten vorgesehen ist.

5. Vorrichtung nach einem der vorangegangenen Ansprüche 1 - 4, **dadurch gekennzeichnet, daß** eine Lage (42) aus einem nachgiebigen Material zwischen dem Verriegelungselement (14c) und den Leisten (20,22) vorgesehen ist.

6. Vorrichtung nach einem der vorangegangenen Ansprüche, **dadurch gekennzeichnet, daß** sie zwei parallele Vertiefungen (18) der gleichen Abmessungen umfaßt, die in dem Gegenstand gebildet sind, wobei ein Paar von Leisten (20,22) in jedem der Vertiefungen vorgesehen ist, und wobei alle Leisten mit einer einzigen Stützkufe (14) verbunden sind.

7. Vorrichtung nach Anspruch 6**, dadurch gekennzeichnet, daß** diejenigen beiden Leisten (20,2), die sich am weitesten innen in der Vorrichtung befinden, aus einem ersten Material gebildet sind, das einen Dilatationskoeffizienten aufweist, welcher höher als der eines zweiten Materials ist, aus welchem die beiden anderen Leisten (20) und die Stützkufe (14) gebildet sind.

8. Vorrichtung nach Anspruch 7, **dadurch gekennzeichnet, daß** das erste Material aus rostfreiem Stahl und das zweite Material aus Invar-Stahl hergestellt ist.

9. Vorrichtung nach einem der Ansprüche 6 bis 8, **dadurch gekennzeichnet, daß** die einzige Stützkufe (14) zwischen den Vertiefungen (18) eine Positionierungseinrichtung (32) aufweist, die ohne Spiel in den zylindrischen Sitz (34) aufgenommen ist, welche in dem Gegenstand gebildet ist.

10. Vorrichtung nach Anspruch 9, **dadurch gekennzeichnet, daß** eine Lage aus nachgiebigem Material (42) zwischen dem Gegenstand und der Positionierungseinrichtung vorgesehen ist.

11. Vorrichtung nach einem der Ansprüche 4, 5 und 10, **dadurch gekennzeichnet, daß** das nachgiebige Material aus Gold ist.
